# EUROPÄISCHE PATENTANMELDUNG

(11) **EP 1 981 237 A1**
(43) Veröffentlichungstag der Anmeldung: **15.10.2008**
(21) Anmeldenummer: 07007622.9
(22) Anmeldetag: 13.04.2007
(51) Int. Cl.: H04L 29/06, H04L 12/22

(54) **Verfahren und Vorrichtung zum Autorisieren eines Benutzers für eine Transaktion**

(71) Anmelder: Xtramind Technologies GmbH, 66123 Saarbrücken (DE)
(72) Erfinder: Knaf, Mario H., 66287 Quierschied (DE)
(74) Vertreter: Banse, Klaus-Dieter

(57) **Zusammenfassung**

Die Erfindung betrifft ein Verfahren zum Autorisierung eines Benutzers für eine Transaktion. Das Verfahren umfasst die Schritte des Anforderns (S1) der Transaktion mit einer Anfragenachricht über eine Datenverarbeitungseinheit (4) des Benutzers, des Mitteilens (S3) einer Telefonnummer und einer Identifikationsnummer an den Benutzer, des Vergleichens (S6) einer Identifikationsnummer, die von dem Benutzer bei einem Anruf mit einem Telefonendgerät (10) mit der Telefonnummer eingegeben wird, mit der dem Benutzer mitgeteilten Identifikationsnummer, und des Autorisierens (S8) des Benutzers für die Transaktion, wenn die eingegebene Identifikationsnummer und die mitgeteilte Identifikationsnummer übereinstimmen, so dass die Transaktion mit Hilfe der Datenverarbeitungseinheit (4) durchführbar ist. Die Erfindung betrifft weiterhin eine entsprechende Autorisierungseinheit, eine Transaktionsbereitstellungseinheit sowie ein Autorisierungssystem.

## Beschreibung

Die Erfindung betrifft ein Verfahren und eine Vorrichtung zum Autorisieren eines Benutzers für eine Transaktion.

Vielfach ist es wünschenswert, über das Internet angebotene Produkte und Dienstleistungen kostenpflichtig einem Benutzer zur Verfügung zu stellen. Bei einem Fall, bei dem die Dienstleistung das Bereitstellen einer Information betrifft, muss daher zwischen der Anforderung der entsprechenden Information und dem Ausliefern der Information an den Benutzer eine Authentifizierung des Benutzers durchgeführt werden, um den Benutzer eindeutig zu identifizieren, so dass z.B. sichergestellt werden kann, dass eine Zahlung durch den Benutzer gewährleistet ist.

Eine Autorisierung eines Benutzers wird häufig durch Interaktion mit einer Webseite, zu der der Benutzer nach Anforderung der Information gelangt bzw. über die er die entsprechende Information anfordert, durchgeführt. Dabei wird der Benutzer in der Regel aufgefordert, entsprechende benutzerspezifische Daten, wie z.B. Name, Email-Adresse, Personalausweisnummer, Kontoverbindung als Informationen zur Durchführung des Bezahlvorgangs, Adresse und dgl. einzugeben. Erst nach der Eingabe der angefragten Informationen wird der Benutzer autorisiert. Die Akzeptanz einer solchen Vorgehensweise seitens der Benutzer eines solchen Systems ist jedoch begrenzt. Die Gründe hierfür liegen zum einen darin, dass nicht alle Benutzer die entsprechenden Daten über die unsichere Internetverbindung übermitteln wollen, da diese abgehört und missbraucht werden könnten. Andererseits ist die Eingabe der entsprechenden Daten für den Benutzer aufwändig, da er diese zunächst heraussuchen muss und/oder diese in mehrere Felder (z.B. eines Webformulars) eintragen muss, was zeitaufwändig ist und zu Eingabefehlern führen kann.

Andere Verfahren schlagen vor, auf der Webseite eine Kontaktinformation, wie z.B. eine kostenpflichtige Service-Telefonnummer, zu hinterlegen, über die die benötigte Information als gesprochene Sprache abgefragt werden kann. Dies ist jedoch nur bei einfachen Informationen möglich wie die Ansage von Telefonnummern und dergleichen. Eine Bezahlung erfolgt dann über die Telefonrechnung.

Weiterhin ist es möglich, den Erhalt der Dienstleistung zu genehmigen und somit einer Bezahlung zuzustimmen, indem eine spezielle kostenpflichtige Service-Telefonnummer dem Benutzer der Webseite zur Verfügung gestellt wird. Durch Anrufen der bereitgestellten Service-Telefonnummer autorisiert sich der Benutzer für eine der Service-Telefonnummer zugeordnete Transaktionsart, d.h. für die Bereitstellung der kostenpflichtigen Information. Das Verwenden der Service-Telefonnummer ermöglicht eine Abrechnung über den Telekommunikationsanbieter, der die Service-Telefonnummer mit einem entsprechenden Tarifmodell zur Verfügung stellt.

Ein solches System ist jedoch nicht in der Lage, jeder einzelnen Transaktion eine eigene Service-Telefonnummer zur Verfügung zu stellen, da die Anzahl der verfügbaren Service-Telefonnummern beschränkt ist. Wird nur eine Service-Telefonnummer für mehrere Transaktionen verwendet, ist es nicht mehr ohne weiteres möglich, den Benutzer, der die kostenpflichtige Information durch seine Autorisierung anfordern möchte, eindeutig zu identifizieren.

Es ist daher Aufgabe der vorliegenden Erfindung, ein Verfahren und ein System zur Verfügung zu stellen, bei dem eine Transaktion, wie z.B. das Bereitstellen einer kostenpflichtigen Information, autorisiert werden kann, sodass der Empfänger der kostenpflichtigen Information in hinreichender Weise als die Person identifiziert werden kann, die der Transaktion zugestimmt hat und z.B. deren Kosten übernehmen will.

Es ist weiterhin Aufgabe der vorliegenden Erfindung, ein Verfahren und System zum Autorisieren einer Transaktion zur Verfügung zu stellen, das modular aufgebaut ist, und insbesondere eine Schnittstelle zwischen einem Telekommunikationsanbieter und einem eine Transaktion bereitstellenden bzw. vermittelnden Unternehmen bereitstellt, so dass sowohl die Anzahl der Telekommunikationsanbieter als auch die Anzahl der die Transaktion bereitstellenden bzw. vermittelnden Unternehmen beliebig sind.

Diese Aufgabe wird durch das Verfahren nach Anspruch 1 sowie durch die Autorisierungseinheit, die Transaktionsbereitstellungseinheit sowie das Autorisierungssystem gemäß den nebengeordneten Ansprüchen gelöst.

Gemäß einem ersten Aspekt ist ein Verfahren zum Autorisieren eines Benutzers für eine Transaktion vorgesehen. Das Verfahren umfasst die Schritte des Anforderns der Transaktion mit einer Anfragenachricht über eine Datenverarbeitungseinheit des Benutzers, des Mitteilens einer Telefonnummer und einer Identifikationsnummer an den Benutzer vorzugsweise über die Datenverarbeitungseinheit, des Vergleichens einer Identifikationsnummer, die von dem Benutzer bei einem Anruf mit einem Telefonendgerät mit der Telefonnummer eingegeben wird, mit der dem Benutzer mitgeteilten Identifikationsnummer, sowie des Autorisierens des Benutzers für die Transaktion, wenn die eingegebene Identifikationsnummer und die mitgeteilte Identifikationsnummer übereinstimmen, so dass die Transaktion mit Hilfe der Datenverarbeitungseinheit durchführbar ist.

Das Verfahren ermöglicht über eine getrennte Autorisierungseinheit das Identifizieren eines Benutzers in ausreichender Weise, um z.B. eine Bezahlung einer kostenpflichtigen Transaktion sicherzustellen, ohne dass der Benutzer weitere Eingaben zusätzlich zur Anfrage-Nachricht übermitteln muss, um sich für eine durch die Anfrage-Nachricht bestimmte Transaktion zu autorisieren. Zusätzlich wird die Autorisierung sicherer, da die Bereitstellung der Transaktion und der Vorgang der Autorisierung über getrennte Kommunikationspfade erfolgt.

Weiterhin kann die Transaktion einem Bereitstellen einer Information, einem Bereitstellen eines Zugangs zu einer Information und/oder einem Dienst oder einer Einwilligung in eine Warentransaktion entsprechen.

Gemäß einer weiteren Ausführungsform können die Identifikationsnummern miteinander verglichen werden, wenn die Telefonnummer, die der Benutzer anruft, der mitgeteilten Telefonnummer entspricht.

Insbesondere kann das Vergleichen der eingegebenen Identifikationsnummer mit der dem Benutzer mitgeteilten Identifikationsnummer in einer Autorisierungseinheit und das Autorisieren des Benutzers für die Transaktion in einer Transaktionsbereitstellungseinheit erfolgen, wobei die Autorisierungseinheit die mitgeteilte Identifikationsnummer in Form einer Transaktionsinformation von der Transaktionsbereitstellungseinheit erhält.

Weiterhin kann die Autorisierungseinheit eine Bestätigungsmitteilung an die Transaktionsbereitstellungseinheit senden, wenn das Vergleichen eine Übereinstimmung der eingegebenen und der mitgeteilten Identifikationsnummer ergibt.

Das Vergleichen der eingegebenen Identifikationsnummer mit der dem Benutzer mitgeteilten Identifikationsnummer kann in einer Transaktionsbereitstellungseinheit durchgeführt werden, wobei die vom Benutzer eingegebene Identifikationsnummer über die Autorisierungseinheit an die Transaktionsbereitstellungseinheit übermittelt wird.

Gemäß einer weiteren Ausführungsform wird das Anfordern der Transaktion durch den Benutzer mit Hilfe einer Anfrage-Email-Nachricht an eine Transaktionsbereitstellungseinheit oder über einen Aufruf einer Webseite auf einem bzw. über einen Webserver in der Transaktionsbereitstellungseinheit durchgeführt.

Nach dem Autorisieren kann die Anfrage-Nachricht an eine externe Informationsbereitstellungseinheit weitergeleitet werden, wobei die Informationsbereitstellungseinheit eine Antwort-Nachricht direkt an den Benutzer übermittelt.

Gemäß einem weiteren Aspekt ist eine Autorisierungseinheit zum Autorisieren eines Benutzers mit Hilfe einer Transaktionsbereitstellungseinheit vorgesehen. Die Autorisierungseinheit umfasst einen Einwahlknoten, der einer Telefonnummer zugeordnet ist, eine Analyseeinrichtung zum automatischen Erfassen einer von einem Benutzer eingegebenen Identifikationsnummer, sowie eine Kommunikationseinrichtung, die ausgebildet ist, um eine Transaktionsinformation zu empfangen, die zumindest eine dem Benutzer mitgeteilte Identifikationsnummer enthält, um eine von dem Benutzer bei einem Anruf mit der Telefonnummer eingegebene Identifikationsnummer mit der dem Benutzer mitgeteilten Identifikationsnummer zu vergleichen und eine Bestätigungsinformation bereitzustellen, wenn die eingegebene Identifikationsnummer und die mitgeteilte Identifikationsnummer übereinstimmen.

Gemäß einem weiteren Aspekt ist eine Transaktionsbereitstellungseinheit zum Autorisieren eines Benutzers mit Hilfe einer Autorisierungseinheit vorgesehen. Die Transaktionsbereitstellungseinheit umfasst eine Verarbeitungseinheit, um eine Anfragenachricht eines Benutzers zum Anfordern der Transaktion zu empfangen und eine Telefonnummer und eine Identifikationsnummer dem Benutzer mitzuteilen, sowie eine Kommunikationseinheit, um eine Transaktionsinformation, die zumindest die Identifikationsnummer enthält, an die Autorisierungseinheit zu versenden, und eine Bestätigungsinformation zu empfangen. Die Verarbeitungseinheit autorisiert den Benutzer für die Transaktion abhängig von der Bestätigungsinformation.

Weiterhin kann die Bestätigungsinformation angeben, dass sich der Benutzer mit der Telefonnummer und der Identifikationsnummer autorisiert hat.

Alternativ oder zusätzlich kann die Bestätigungsinformation die vom Benutzer angegebene Identifikationsnummer angeben.

Nach erfolgter Autorisierung des Benutzers kann die Anfrage-Nachricht an ein externes Informationsbereitstellungssystem weitergeleitet werden.

Die Verarbeitungseinheit kann weiterhin ausgebildet sein, um nach erfolgter Autorisierung des Benutzers abhängig von der Anfrage-Nachricht eine Antwort-Nachricht zu generieren und diese an den Benutzer zu übermitteln.

Gemäß einem weiteren Aspekt ist ein Autorisierungssystem zum Autorisieren eines Benutzers vorgesehen. Das Autorisierungssystem umfasst mindestens eine Transaktionsbereitstellungseinheit, die auf einer Verarbeitungseinheit eine Autorisierungsplattform bereitstellt, um eine Anfragenachricht eines Benutzers zum Anfordern der Transaktion zu empfangen und um eine Telefonnummer und eine Identifikationsnummer dem Benutzer mitzuteilen, und eine Kommunikationseinheit zum Empfangen einer Bestätigungsinformation aufweist, wobei die Verarbeitungseinheit den Benutzer für die Transaktion abhängig von der Bestätigungsinformation autorisiert. Das Autorisierungssystem umfasst weiterhin mindestens eine Autorisierungseinheit, die einen Einwahlknoten, der einer Telefonnummer zugeordnet ist, eine Analyseeinrichtung zum automatischen Erfassen einer von einem Benutzer über den Einwahlknoten eingegebenen Identifikationsnummer, und eine Kommunikationseinrichtung aufweist, wobei die Kommunikationseinrichtung ausgebildet ist, um zumindest die Bestätigungsinformation der Transaktionsbereitstellungseinheit bereitzustellen.

Weiterhin kann die Kommunikationseinrichtung der Transaktionsbereitstellungseinheit ausgebildet sein, um eine Transaktionsinformation, die zumindest die Identifikationsnummer enthält, an die Autorisierungseinheit zu versenden, und eine Bestätigungsinformation zu empfangen, wobei die Kommunikationseinrichtung der Autorisierungseinheit ausgebildet ist, um die Transaktionsinformation zu empfangen, die zumindest die dem Benutzer mitgeteilte Identifikationsnummer enthält, um eine von dem Benutzer bei einem Anruf mit der Telefonnummer eingegebenen Identifikationsnummer mit der dem Benutzer mitgeteilten Identifikationsnummer zu vergleichen und die Bestätigungsinformation bereitzustellen, wenn die eingegebene Identifikationsnummer und die mitgeteilte Identifikationsnummer übereinstimmen.

Bei mehreren Autorisierungseinheiten kann die Transaktionsbereitstellungseinheit an alle Autorisierungseinheiten oder an eine Untermenge der Autorisierungseinheiten jeweils die Transaktionsinformation senden, wobei die Untermenge abhängig von dem Inhalt der Anfrage-Nachricht und/oder einer Meta-Information der Anfrage-Nachricht und/oder einer Benutzervorgabe und/oder einer Benutzerhistorie bestimmt ist.

Die Kommunikationseinheit der Transaktionsbereitstellungseinheit kann ausgebildet sein, um als Bestätigungsinformation die vom Benutzer eingegebene Identifikationsnummer und insbesondere die vom Benutzer gewählte Telefonnummer zu empfangen.

Zusätzlich kann eine Informationsbereitstellungseinheit vorgesehen sein, die nach erfolgter Autorisierung eine Anfrage-Nachricht von der Transaktionsbereitstellungseinheit empfängt und eine Antwort-Nachricht direkt oder über die Transaktionsbereitstellungseinheit an das Datenverarbeitungsgerät des Benutzers übermittelt.

Weitere vorteilhafte Ausgestaltungen der Erfindung sind in den abhängigen Ansprüchen angegeben.

Bevorzugte Ausführungsformen der vorliegenden Erfindung werden nachfolgend anhand der beigefügten Zeichnungen näher erläutert. Es zeigen:
Fig. 1 ein Autorisierungssystem gemäß einer ersten Ausführungsform der vorliegenden Erfindung;
Fig. 2 ein Ablaufdiagramm zur Veranschaulichung des Verfahrens zum Autorisieren gemäß einer weiteren Ausführungsform der Erfindung;
Fig. 3 ein Autorisierungssystem gemäß einer weiteren Ausführungsform der vorliegenden Erfindung; und
Fig. 4 ein Autorisierungssystem mit mehreren Autorisierungseinheiten und mehreren Transaktionsbereitstellungseinheiten gemäß einer weiteren Ausführungsform der Erfindung.

In der nachfolgenden Beschreibung entsprechen gleiche Bezugszeichen Elementen gleicher oder vergleichbarer Funktion oder gleichen oder vergleichbaren Verfahrensschritten.

Unter dem Begriff der Transaktion wird in der nachfolgenden Beschreibung ein Vorgang bezeichnet, der durch das Verfahren zur Autorisierung autorisiert werden soll. Die Transaktion kann das Bereitstellen einer Information, einer Dienstleistung oder eines Produktes umfassen und wird erst nach der Autorisierung durch den Benutzer freigegeben wird.

Autorisierung im Sinne dieser Erfindung bezeichnet das Gewähren des Zugangs zu einer Transaktion für einen Benutzer, nachdem dieser in hinreichendem Maße authentifiziert worden ist, z.B. um sicherzustellen, dass eine Bezahlung der Transaktion durch den Benutzer vorgenommen werden kann oder z.B. um eine Identitätsüberprüfung vornehmen zu können.

Eine Service-Telefonnummer kann z.B. einer kostenpflichtigen Telefonnummer entsprechen, über die Zahlungen über den Telekommunikationsanbieter vorgenommen werden können. Während einer Verbindung zu einer Service-Telefonnummer kann unter Berücksichtigung der gesetzlichen Bestimmungen für Telekommunikation ein Tarifwechsel durchgeführt werden, oder es können weitere, nicht zeitgebundene Kosten entstehen (sog. Blocktarif). Der Telekommunikationsanbieter rechnet die Zahlung gegenüber dem Anrufer über z.B. die Telefonrechnung ab und überweist zumindest einen Teil des in Rechnung gestellten Betrags an den Dienstleistungsanbieter.

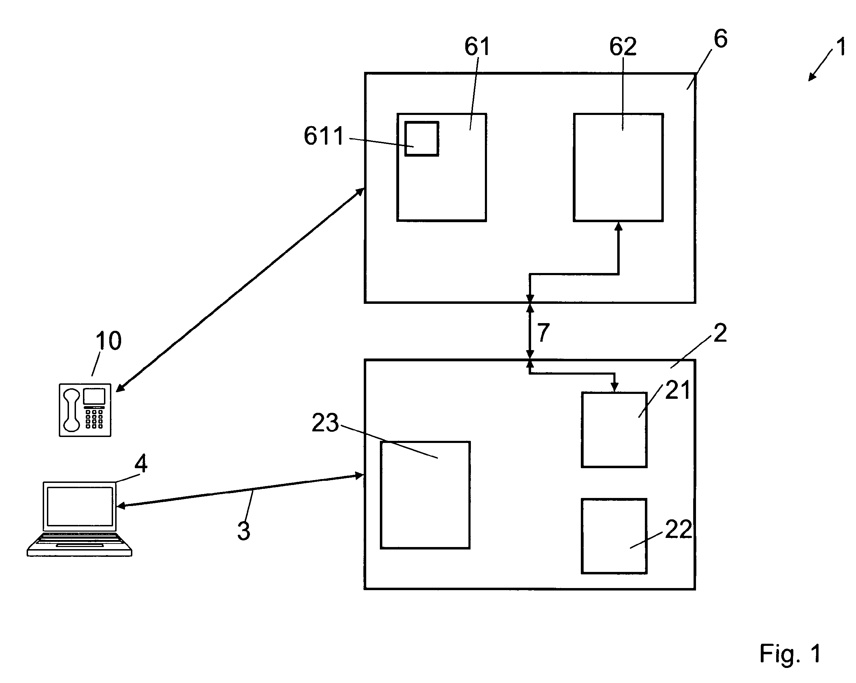

In Fig. 1 ist schematisch ein Autorisierungssystem 1 gemäß der vorliegenden Erfindung dargestellt. Das Autorisierungssystem 1 umfasst eine Transaktionsbereitstellungseinheit 2, die z.B. in Form eines Servers oder eines sonstigen Verarbeitungssystems, ausgebildet ist. Ein externer einem Benutzer zugeordneter Computer 4 oder sonstiges Datenverarbeitungsgerät steht über ein Netzwerk, z.B. das Internet 3, mit der Transaktionsbereitstellungseinheit 2 in Verbindung oder ist mit dieser verbindbar. Die Transaktionsbereitstellungseinheit 2 kann einen Webserver oder einen E-Mail-Server umfassen oder auch einen sonstigen Server, der auf eine Anfrage von dem Benutzer B reagiert, und eine Information bereitstellen kann. Alternativ kann die Transaktionsbereitstellungseinheit 2 die Anfrage-Nachricht auch von einem externen E-Mail-Server oder sonstigen Nachrichten-Server abrufen.

Das für die Anfrage-Nachricht verwendete Nachrichten-Protokoll ist im wesentlichen beliebig. Die Anfrage-Nachricht kann als Email-Nachricht, Webseiten-Formular ausgebildet sein oder einem sonstigen Mitteilungsformat entsprechen. Für das nachfolgend beschriebene Ausführungsbeispiel wird der Einfachheit halber davon ausgegangen, dass die Transaktionsbereitstellungseinheit 2 einen E-Mail-Server , der E-Mails empfangen und versenden kann beinhaltet oder den E-Mail-Server zum Empfang der Anfrage-E-Mail-Nachricht abfragt.

Eine Verarbeitungseinheit 23 der Transaktionsbereitstellungseinheit 2 führt eine geeignete Software aus, um eine Autorisierungsplattform zu betreiben. Die Autorisierungsplattform kann z.B. einem Webportal, einer Webseite, einem E-Mail-Empfangs- und Sendesystem oder dergleichen entsprechen, die die Funktionalität der Verarbeitungseinheit beinhalten. Die Verarbeitungseinheit 23 ist über eine geeignete Kommunikationsverbindung 7, wie z.B. das Internet oder eine Telefonleitung und dgl., mit einer separat von der Transaktionsbereitstellungseinheit 2 vorgesehen Autorisierungseinheit 6 verbunden, die z.B. von einem Telekommunikationsanbieter betrieben wird. Die Autorisierungseinheit 6 umfasst einen Einwahlknoten 61, über den der Benutzer sich bei der Autorisierungseinheit 6 mit Hilfe eines Telefonendgeräts 10 einwählen kann. Der Einwahlknoten 61 ist einer bestimmten Rufnummer zugeordnet ist und verfügt über eine Analyseeinrichtung 611 zum Erkennen einer Spracheingabe oder Telefontasteneingabe des Benutzers B, um Eingaben von dem Benutzer in maschineller Weise zu erfassen. Eine über den Einwahlknoten 61 von dem Benutzer B über dessen Telefonendgerät 10 erhaltene Information wird einer Kommunikationseinheit 62 zur Verfügung gestellt, die die Steuerung der Kommunikation mit der Transaktionsbereitstellungseinheit 2 übernimmt.

Die Transaktionsbereitstellungseinheit 2 umfasst neben der Verarbeitungseinheit 23 zum Ausführen der Autorisierungsplattform eine Kommunikationseinheit 21, um mit der Autorisierungseinheit 6 über die Kommunikationsverbindung 7 in geeigneter Weise zu kommunizieren. Weiterhin weist die Transaktionsbereitstellungseinheit 2 eine Datenbank 22, in der die Information bereitgestellt wird, die der Benutzer B über seinen Computer 4 anfordert und die diesem bereitgestellt wird, sobald er sich dafür autorisiert hat.

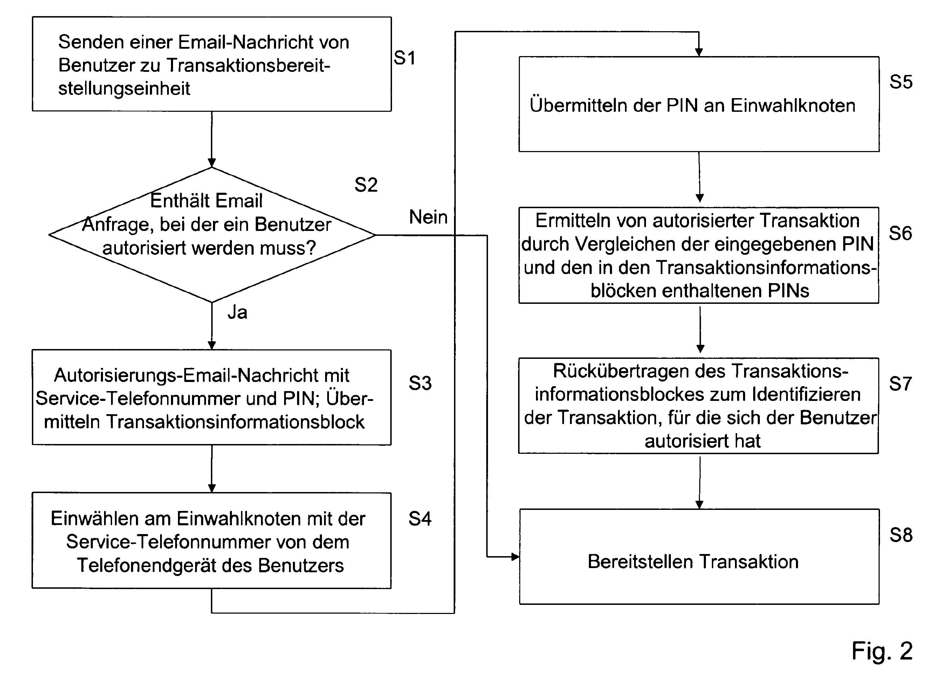

In Fig. 2 wird der Verfahrensablauf zum Autorisieren des Benutzers zum Durchführen der Transaktion beschrieben. In einem ersten Schritt S1 sendet der Benutzer mithilfe seines Computers 4 eine E-Mail-Nachricht an die Transaktionsbereitstellungseinheit 2, wo diese in der Verarbeitungseinheit 23 analysiert wird und eine eventuell darin enthaltene Anfrage des Benutzers B erkannt werden kann. Die Verarbeitungseinheit 23 überprüft in einem Schritt S2 die E-Mail-Nachricht, ob die Antwort auf die E-Mail-Nachricht eine Autorisierung des Benutzer B erforderlich macht oder nicht, d.h. z.B. die Beantwortung der E-Mail-Nachricht kostenpflichtig ist oder nicht. Dies kann beispielsweise durch automatisches Erkennen einer Kundennummer oder einer Produktnummer oder durch inhaltliche Analyse des Anfragetextes erfolgen, womit erkannt werden kann, ob der Benutzer berechtigt ist, die Antwort auf seine E-Mail-Nachricht ohne zusätzliche Kosten oder mit zusätzlichen Kosten zu erhalten.

Wird festgestellt, dass eine Autorisierung des Benutzers erforderlich ist, wird dem Benutzer in Schritt S3 eine Autorisierungs-E-Mail-Nachricht gesendet, die eine Service-Telefonnummer und eine Identifikationsnummer enthält. Die Autorisierungs-E-Mail-Nachricht wird automatisch durch die Verarbeitungseinheit 23 generiert und an den Computer 4 des Benutzers B mithilfe der Antwortadresse, die in seiner Anfrage-E-Mail enthalten ist, gesendet. Selbstverständlich ist es möglich, dass die Servicetelefonnummer und die dazugehörige Identifikationsnummer auch auf anderem Wege dem Benutzer B mitgeteilt werden, z.B. durch Bereitstellen der Information auf einer mithilfe der Transaktionsbereitstellungseinheit 2 bereitgestellten Webseite, auf die der Benutzer B mit einem Link z.B. in der Antwort-Email-Nachricht geführt wird.

Im Wesentlichen gleichzeitig, d.h. gekoppelt an das Versenden der Antwort-Email-Nachricht an den Computer 4 des Benutzers B, wird von der Transaktionsbereitstellungseinheit 2 ein Transaktionsinformationsblock an die Autorisierungseinheit 6 über die Kommunikationsverbindung 7 gesendet (Schritt S3). Der Transaktionsinformationsblock enthält die dem Benutzer übermittelte Service-Telefonnummer, die in der Verarbeitungseinheit 23 automatisch erstellte Identifikationsnummer, um so der Autorisierungseinheit 6 mitzuteilen, für welche Transaktion eine Autorisierung erwartet wird. Optional kann der Transaktionsinformationsblock auch eine Tarifinformation enthalten, die den Betrag bezeichnet, mit dem der Benutzer B belastet werden soll. Darüber hinaus ist es möglich, dass der Transaktionsinformationsblock eine Transaktionsnummer umfasst, die die Transaktion eindeutig kennzeichnet.

Möchte sich der Benutzer B für die Transaktion autorisieren, so wählt der Benutzer B an seinem Telefonendgerät 10 die Service-Telefonnummer und stellt damit eine Verbindung zu dem Einwahlknoten 61 der Autorisierungseinheit 6 her, die z.B. am Ort eines Telekommunikationsanbieter vorgesehen sein kann (Schritt S4). Der Benutzer B wird von dem Einwahlknoten 61 aufgefordert, die Identifikationsnummer einzugeben, um sich für die Transaktion zu autorisieren. In Schritt S5 wird die Identifikationsnummer an den Einwahlknoten 61 übermittelt. Die Eingabe der Identifikationsnummer kann je nach Ausgestaltung des Einwahlknotens bzw. nach Wunsch des Benutzers entweder als Spracheingabe oder als Telefontasteneingabe erfolgen. In einer Analyseeinrichtung 611 des Einwahlknotens 61 werden bei einer Spracheingabe die gesprochenen Ziffern (oder Buchstaben) der Identifikationsnummer von dem Sprachmodul interpretiert. Bei einer Telefontastenangabe werden die MFC-Codes der Telefontasten analysiert. In beiden Fällen wird die eingegebene Identifikationsnummer der Kommunikationseinheit 62 der Autorisierungseinheit 6 übermittelt.

Die Kommunikationseinheit 62 der Autorisierungseinheit 6 empfängt nun über eine bestimmte Service-Telefonnummer eine Identifikationsnummer von dem Benutzer B und überprüft nun anhand der empfangenen Transaktionsinformationsblöcke, welche Transaktion autorisiert worden ist (Schritt S6). Ist die Transaktion durch Eingabe der korrekten Identifikationsnummer durch den Benutzer autorisiert worden, wird dies der Transaktionsbereitstellungseinheit 2 in Schritt S7 in geeigneter Weise mitgeteilt, z.B. durch Rückübertragen des Transaktionsinformationsblockes oder lediglich der Transaktionsinformationsnummer, sofern diese in dem Transaktionsinformationsblock enthalten war.

Sobald die Kommunikationseinheit 62 der Autorisierungseinheit 6 die korrekte Autorisierung erkannt hat und diese an die Transaktionsbereitstellungseinheit 2 übermittelt hat (Schritt S7), ist der Benutzer B für die Transaktion autorisiert, um z.B. die angeforderte Information zu erhalten. Dazu kann beispielsweise aus der Datenbank 22 der Transaktionsbereitstellungseinheit 2 die angeforderte Information ausgelesen und in einer Antwort-E-Mail-Nachricht an den Computer 4 des Benutzers B übermittelt werden (Schritt S8).

Wenn der Benutzer B mithilfe seines Computers 4 auf der Transaktionsbereitstellungseinheit 2 eine Webseite aufgerufen hat, deren Zugang eine Autorisierung erfordert und diesem in ähnlicher Weise wie bei dem E-Mail-System eine Service-Telefonnummer und eine Identifikationsnummer bereitgestellt worden ist, so kann die Transaktionsbereitstellungseinheit 2 nach Empfangen der Bestätigungsinformation, d.h. der Transaktionsinformationsnummer von der Kommunikationseinheit 62 der Autorisierungseinheit 6 den Zugang zu der angeforderten Webseite freischalten und insbesondere die Webseite automatisch an den Computer 4 des Benutzers B übermitteln. Auf diese Weise kann der Benutzer B den Empfang der zu autorisierenden Webseite durch den Anruf der Service-Telefonnummer und Eingabe der Identifikationsnummer triggern, sodass keine weiteren Handlungen seitens des Benutzers B erforderlich sind, um die angefragte Information zu erhalten.

Im oben beschriebenen Ausführungsbeispiel erfolgt die Überprüfung der Korrektheit der an dem Einwahlknoten 61 eingegebenen Identifikationsnummer in der Kommunikationseinheit 62 der Autorisierungseinheit 6. Alternativ ist es auch möglich, dass die Kommunikationseinheit 62 die über den Einwahlknoten 61 empfangene Identifikationsnummer ohne weitere Überprüfung an die Transaktionsbereitstellungseinheit 2 weiterleitet, sodass dort die Identifikationsnummer eindeutig einer entsprechenden Transaktion und damit einem Benutzer B zugeordnet werden kann. Je nach Menge der gleichzeitig möglichen Transaktionen können auch mehrere Service-Telefonnummern bereitgestellt werden, die über einen entsprechenden Einwahlknoten 61 verfügbar sind. Eine Kennzeichnung der Transaktion erfolgt dann durch die Übermittlung der Kombination der bestimmten Service-Telefonnummer und der Identifikationsnummer, sodass die Kommunikationseinheit 62, wenn sie keine Überprüfung der Korrektheit der Identifikationsnummer durchführt, sowohl die Service-Telefonnummer, die der Benutzer B gewählt hat, als auch die Identifikationsnummer an die Transaktionsbereitstellungseinheit 2 weiterleitet.

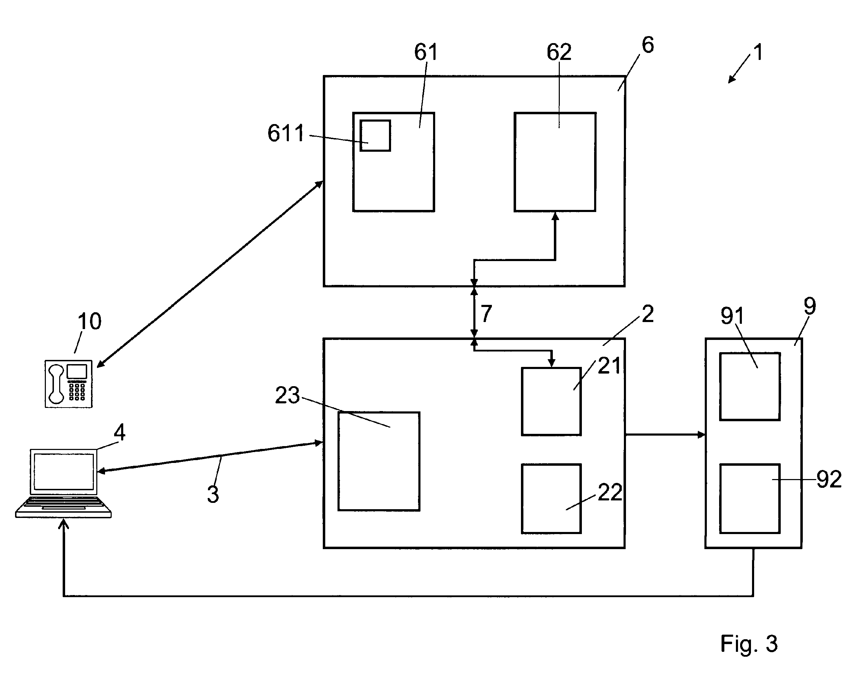

In Fig. 3 ist eine weitere Ausführungsform eines Autorisierungssystems gemäß der vorliegenden Erfindung dargestellt. Im Unterschied zur Ausführungsform der Fig. 1 ist bei der Ausführungsform der Fig. 3 die angefragte Information nicht auf der Transaktionsbereitstellungseinheit 2 verfügbar, sondern wird von einem externen Dienstanbieter bereitgestellt. Der Dienstanbieter betreibt ein Informationsbereitstellungssystem 9, das eine Datenbank 91 und/oder Kommunikationsschnittstellen 92 aufweisen kann. Die Datenbank 91 kann die entsprechend von dem Benutzer B angefragten Informationen aufweisen. Die Transaktionsbereitstellungseinheit 2 kann die von dem Benutzer B mithilfe seines Computers 4 gesendete Anfrage-E-Mail-Nachricht an das Informationsbereitstellungssystem 9 weiterleiten, wo die Anfrage-E-Mail-Nachricht bearbeitet wird. Die Bearbeitung kann automatisch erfolgen, sodass eine angefragte Information aus der Datenbank 91 dem Benutzer bereitgestellt wird und so z.B. per E-Mail-Nachricht direkt von dem Informationsbereitstellungssystem 9 an den Computer 4 des Benutzers gesendet wird, ohne dass die Transaktionsbereitstellungseinheit 2 beteiligt ist. Alternativ kann das Informationsbereitstellungssystem 9 die angefragte Information an die Transaktionsbereitstellungseinheit 2 zurück übermitteln, so dass die Transaktionsbereitstellungseinheit 2 die Antwort-E-Mail-Nachricht generiert und an den Computer 4 des Benutzers versendet. Dadurch kann auch eine Anonymisierung realisiert werden, so dass der anfragende Benutzer dem Informationsbereitstellungssystem 9 nicht bekannt gegeben wird. Weiterhin kann die Anfrage-E-Mail-Nachricht über eine entsprechende Kommunikationsschnittstelle 92 an einen Bearbeiter weitergeleitet werden, der die E-Mail manuell beantwortet und diese entweder indirekt über die Transaktionsbereitstellungseinheit 2 oder direkt an den Computer des Benutzers 4 versendet. Wenn die Antwort-Email-Nachricht von dem Informationsbereitstellungssystem 9 direkt an den Computer 4 des Benutzers B gesendet wird, kann die Rechenlast in der Verarbeitungseinheit 23 der Transaktionsbereitstellungseinheit 2 reduziert werden.

Bei einer Überprüfung der eingegebenen Identifikationsnummer auf Korrektheit in der Kommunikationseinheit 62 kann auch eine Zeitdauer ermittelt werden, zwischen dem Bereitstellen der Service-Telefonnummer und der ldentifikationsnummer an den Benutzer, z.B. über die Antwort-E-Mail-Nachricht an den Computer 4 und den Anruf des Benutzers B an dem Einwahlknoten 61 einschließlich der Eingabe der entsprechenden Identifikationsnummer. Abhängig von der ermittelten Zeitdauer kann eine Priorität der Anfrage-E-Mail-Nachricht zugeordnet werden. Ruft der Benutzer B den Einwahlknoten unmittelbar nach Erhalt der E-Mail-Nachricht auf dem Computer 4 (bzw. deren Versand) an und autorisiert sich, so befindet sich der Benutzer B wahrscheinlich an dem Computer 4, sodass er eine entsprechende Antwort-E-Mail-Nachricht unmittelbar nach dem Empfangen öffnen kann und die Information nützen kann. Findet zwischen der Übertragung der Service-Telefonnummer und der Identifikationsnummer an den Benutzer B der entsprechende Telefonanruf an dem Einwahlknoten 61 nicht sofort, sondern erst nach einer gewissen Zeit statt, so kann die Anfrage-E-Mail-Nachricht mit einer niedrigeren Priorität versehen werden. Dadurch können eine Reihe von Anfrage-E-Mail-Nachrichten priorisiert werden, sodass z.B. bei Weiterleiten an das Informationsbereitstellungssystem 9 die Reihenfolge der Bearbeitung abhängig von den zugeordneten Prioritäten durchgeführt werden kann.

Weiterhin kann die Reihenfolge der Bearbeitung in dem Informationsbereitstellungssystem auch entsprechend einer Historie des Benutzers vorgenommen werden. Die Historie kann dabei alle Informationsanbieter 9 betreffen und insbesondere alle Transaktionen betreffen, die über das Autorisierungssystem autorisiert worden sind.

Weiterhin kann in der Autorisierungseinheit 6 dem Benutzer für den Anruf mit der Service-Telefonnummer ein Betrag in Rechnung gestellt werden, der über die Telefonrechnung des Telekommunikationsanbieters abgerechnet wird. Darüber hinaus kann beim Überprüfen der Korrektheit der eingegebenen Identifikationsnummer in der Kommunikationseinheit 62 der Autorisierungseinheit 6 die dem Benutzer B in Rechnung gestellten Betrag abhängig von der Uhrzeit des Anrufs an dem Einwahlknoten 61 bestimmt werden.

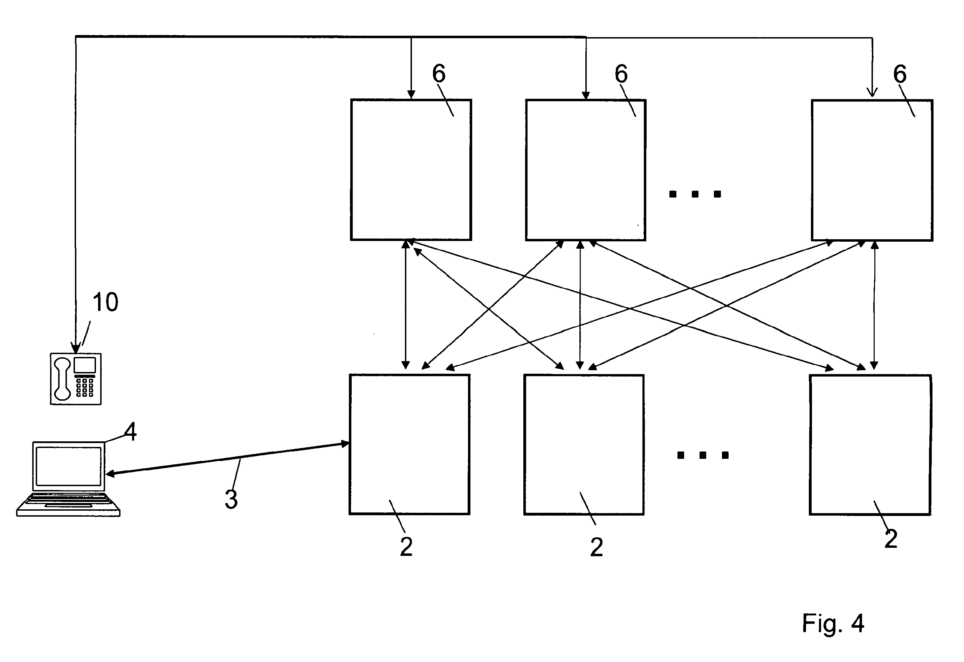

In Fig. 4 ist ein Autorisierungssystem mit mehreren Transaktionsbereitstellungseinheiten 2 und/oder mehreren Autorisierungseinheiten 6 vorgesehen. Eine Autorisierung des Benutzers kann dann über mehrere Autorisierungseinheiten 6 wahlweise erfolgen, sodass der Benutzer B die Autorisierung durch Anrufen z.B. über seinen Festnetzanschluss bei einem Einwahlknoten 61 seines Festnetztelefonanbieters vornehmen kann und alternativ mithilfe seines Mobiltelefons einen Einwahlknoten seines Mobiltelekommunikationsanbieters (Autorisierungseinheit) anrufen kann, um die entsprechende Autorisierung vorzunehmen. In diesem Fall werden dem Benutzer als Autorisierungs-E-Mail-Nachricht alle möglichen Service-Telefonnummern der Einwahlknoten der verschiedenen Telekommunikationsanbieter mitgeteilt. Der Einfachheit halber kann die für das Autorisieren einzugebende Identifikationsnummer bei allen Telekommunikationsanbietern dieselbe sein, sodass die Zuordnung zu einer bestimmten Transaktion in einfacher Weise durch die Identifikationsnummer möglich ist. Die entsprechende Autorisierungseinheit 6, die den Anruf in dem Einwahlknoten 61 entgegennimmt und die Identifikationsnummer empfängt, hat bereits in Verbindung mit dem Mitteilen der Service-Telefonnummern und der Identifikationsnummer an den Benutzer B eine Nachricht von der entsprechenden Transaktionsbereitstellungseinheit erhalten (Schritt S3), dass eine bestimmte Transaktion, die einer bestimmten Identifikationsnummer zugeordnet ist, autorisiert werden soll. Sind mehrere Transaktionsbereitstellungseinheiten bei der Autorisierungseinheit 6 angemeldet, so merkt sich die Kommunikationseinheit 62 der Autorisierungseinheit 6, die den autorisierenden Anruf des Benutzers B entgegennimmt, von welcher Transaktionsbereitstellungseinheit 2 die entsprechende Identifikationsnummer übermittelt worden ist und sendet nach Überprüfung der Korrektheit der eingegebenen Identifikationsnummer die entsprechende Bestätigungsinformation an die entsprechende Transaktionsbereitstellungseinheit zurück, um dort die angeforderte Transaktion zu autorisieren.

Somit ist das Autorisierungssystem gemäß der vorliegenden Erfindung nicht auf eine einzige Transaktionsbereitstellungseinheit und eine einzige Autorisierungseinheit beschränkt, sondern kann über mehrere Transaktionsbereitstellungseinheit dem Benutzer verschiedenartige Transaktionen bereitstellen. Durch das Verwenden eines einheitlichen Datenübermittlungsprotokolls zum Übermitteln der Daten über die Verbindungsleitung 7 an die entsprechenden Autorisierungseinheiten kann das Autorisierungssystem für eine nahezu beliebige Anzahl von Autorisierungseinheiten und Autorisierungsplattformen verwendet werden. Dies ist insbesondere sinnvoll, wenn nicht bekannt ist, ob sich der Benutzer B über einen Festnetzanschluss oder einen Mobilfunkanschluss autorisieren möchte, oder in welchem Land sich der Benutzer B befindet. Da die Autorisierungseinheit in der Regel bei dem Telekommunikationsanbieter vorgesehen ist, ist es somit ausreichend, wenn die Transaktionsbereitstellungseinheit eine entsprechend definierte Kommunikationsverbindung mit den Autorisierungseinheiten aller notwendigen Telekommunikationsanbieter aufweist. Da zunächst nicht bekannt, welchen Telekommunikationsanbieter der Benutzer B wählen wird, um sich zu autorisieren, muss der Transaktionsinformationsblock zunächst an alle Autorisierungseinheiten 6 der möglichen Telekommunikationsanbieter versendet werden.

Alternativ kann in der Verarbeitungseinheit 23 der Autorisierungsplattform eine Überprüfung vorgenommen werden, z.B. anhand der Signatur, die in der Anfrage-E-Mail-Nachricht des Benutzers B verwendet wird, welches Kommunikationsnetz der Benutzer B bevorzugt benutzt. Alternativ kann mithilfe der Signatur wie auch mithilfe der E-Mail-Adresse und der IP-Adresse herausgefunden werden, in welchem Land sich der Benutzer befindet und so die Anzahl der Autorisierungseinheiten, an die der Transaktionsinformationsblock gesendet wird, eingeschränkt werden. Wenn aus der Signatur des Benutzers B erkannt wird, dass der Ort des Benutzers Deutschland ist und eine Festnetztelefonnummer und eine Mobiltelefonnummer eines bestimmten Mobilfunkanbieters angegeben ist, so sollte es ausreichend sein, den Transaktionsinformationsblock an Autorisierungseinheiten aller Festnetztelefonanbieter und den durch die Mobiltelefonnummer möglicherweise erkennbaren Mobiltelefonanbieter zu übermitteln.

## Patentansprüche

1. Verfahren zum Autorisierung eines Benutzers für eine Transaktion, mit folgenden Schritten:
- Anfordern (S1) der Transaktion mit einer Anfragenachricht über eine Datenverarbeitungseinheit (4) des Benutzers;
- Mitteilen (S3) einer Telefonnummer und einer Identifikationsnummer an den Benutzer;
- Vergleichen (S6) einer Identifikationsnummer, die von dem Benutzer bei einem Anruf mit einem Telefonendgerät (10) mit der Telefonnummer eingegeben wird, mit der dem Benutzer mitgeteilten Identifikationsnummer;
- Autorisieren (S8) des Benutzers für die Transaktion, wenn die eingegebene Identifikationsnummer und die mitgeteilte Identifikationsnummer übereinstimmen, so dass die Transaktion mit Hilfe der Datenverarbeitungseinheit (4) durchführbar ist.

2. Verfahren nach Anspruch 1, wobei das Vergleichen (S6) der eingegebenen Identifikationsnummer mit der dem Benutzer mitgeteilten Identifikationsnummer in einer Autorisierungseinheit (6) und das Autorisieren des Benutzers für die Transaktion in einer Transaktionsbereitstellungseinheit (2) erfolgt, wobei die Autorisierungseinheit (6) die mitgeteilte Identifikationsnummer in Form einer Transaktionsinformation von der Transaktionsbereitstellungseinheit (2) erhält, wobei insbesondere die Autorisierungseinheit eine Bestätigungsmitteilung an die Transaktionsbereitstellungseinheit sendet, wenn das Vergleichen eine Übereinstimmung der eingegebenen und der mitgeteilten Identifikationsnummer ergibt.

3. Verfahren nach Anspruch 1, wobei die das Vergleichen (S6) der eingegebenen Identifikationsnummer mit der dem Benutzer mitgeteilten Identifikationsnummer in einer Transaktionsbereitstellungseinheit (2) erfolgt, wobei die vom Benutzer eingegebene Identifikationsnummer über die Autorisierungseinheit (6) an die Transaktionsbereitstellungseinheit (2) übermittelt wird.

4. Verfahren nach einem der Ansprüche 1 bis 3, wobei das Anfordern der Transaktion durch den Benutzer mit Hilfe einer Anfrage-Email-Nachricht an eine Transaktionsbereitstellungseinheit (2) oder über einen Aufruf einer Webseite auf einem bzw. über einen Webserver in der Transaktionsbereitstellungseinheit (2) durchgeführt wird.

5. Verfahren nach einem der Ansprüche 1 bis 4, wobei nach dem Autorisieren die Anfrage-Nachricht an eine externe Informationsbereitstellungseinheit (9) weitergeleitet wird, wobei die Informationsbereitstellungseinheit (9) eine Antwort-Nachricht direkt an den Benutzer übermittelt.

6. Autorisierungseinheit (6) zum Autorisieren eines Benutzers mit Hilfe einer Transaktionsbereitstellungseinheit (2), umfassend:
- einen Einwahlknoten (61), der einer Telefonnummer zugeordnet ist;
- eine Analyseeinrichtung (611) zum automatischen Erfassen einer von einem Benutzer eingegebenen Identifikationsnummer;
- eine Kommunikationseinrichtung (62), die ausgebildet ist, um eine Transaktionsinformation zu empfangen, die zumindest eine dem Benutzer mitgeteilte Identifikationsnummer enthält, um eine von dem Benutzer bei einem Anruf mit der Telefonnummer eingegebenen Identifikationsnummer mit der dem Benutzer mitgeteilten Identifikationsnummer zu vergleichen und eine Bestätigungsinformation bereitzustellen, wenn die eingegebene Identifikationsnummer und die mitgeteilte Identifikationsnummer übereinstimmen.

7. Transaktionsbereitstellungseinheit (2) zum Autorisieren eines Benutzers mit Hilfe einer Autorisierungseinheit (6), umfassend:
- eine Verarbeitungseinheit (23), um eine Anfragenachricht von einem Datenverarbeitungsgerät (4) eines Benutzers zum Anfordern der Transaktion zu erhalten und eine Telefonnummer und eine Identifikationsnummer dem Benutzer mitzuteilen;
- eine Kommunikationseinheit (21), um eine Transaktionsinformation, die zumindest die Identifikationsnummer enthält, an die Autorisierungseinheit (6) zu versenden, und eine Bestätigungsinformation zu empfangen;
wobei die Verarbeitungseinheit (23) den Benutzer für die Transaktion abhängig von der Bestätigungsinformation autorisiert, so dass die Transaktion mit Hilfe der Datenverarbeitungseinheit (4) durchführbar ist.

8. Transaktionsbereitstellungseinheit (2) nach Anspruch 7, wobei die Bestätigungsinformation angibt, dass sich der Benutzer mit der Telefonnummer und der Identifikationsnummer autorisiert hat und/oder die vom Benutzer angegebene Identifikationsnummer angibt.

9. Transaktionsbereitstellungseinheit (2) nach einem der Ansprüche 6 bis 8, wobei nach erfolgter Autorisierung des Benutzers die Anfrage-Nachricht an ein externes Informationsbereitstellungssystem (9) weitergeleitet wird und wobei die Verarbeitungseinheit (23) weiterhin ausgebildet ist, um nach erfolgter Autorisierung des Benutzers abhängig von der Anfrage-Nachricht das Generieren einer Antwort-Nachricht deren Übermittelung an den Benutzer zu veranlassen.

10. Autorisierungssystem zum Autorisieren eines Benutzers, umfassend:
- mindestens eine Transaktionsbereitstellungseinheit (2), die auf einer Verarbeitungseinheit (23) eine Autorisierungsplattform bereitstellt, um eine Anfragenachricht von einem Datenverarbeitungsgerät (4) eines Benutzers zum Anfordern der Transaktion zu erhalten und um eine Telefonnummer und eine Identifikationsnummer dem Benutzer mitzuteilen, und weiterhin eine Kommunikationseinheit (21) zum Empfangen einer Bestätigungsinformation aufweist, wobei die Verarbeitungseinheit (23) den Benutzer für die Transaktion abhängig von der Bestätigungsinformation autorisiert;
- mindestens eine Autorisierungseinheit (6), die einen Einwahlknoten (61), der einer Telefonnummer zugeordnet ist, eine Analyseeinrichtung (611) zum automatischen Erfassen einer von einem Benutzer über den Einwahlknoten eingegebenen Identifikationsnummer, und eine Kommunikationseinrichtung (62) aufweist, wobei die Kommunikationseinrichtung (62) ausgebildet ist, um zumindest die Bestätigungsinformation der Transaktionsbereitstellungseinheit (21) bereitzustellen.

11. Autorisierungssystem nach Anspruch 15, wobei die Kommunikationseinrichtung (21) der Transaktionsbereitstellungseinheit (2) ausgebildet ist, um eine Transaktionsinformation, die zumindest die Identifikationsnummer enthält, an die Autorisierungseinheit (6) zu versenden, und eine Bestätigungsinformation zu empfangen, wobei die Kommunikationseinrichtung (62) der Autorisierungseinheit (6) ausgebildet ist, um die Transaktionsinformation zu empfangen, die zumindest die dem Benutzer mitgeteilte Identifikationsnummer enthält, um eine von dem Benutzer bei einem Anruf mit der Telefonnummer eingegebenen Identifikationsnummer mit der dem Benutzer mitgeteilten Identifikationsnummer zu vergleichen und die Bestätigungsinformation bereitzustellen, wenn die eingegebene Identifikationsnummer und die mitgeteilte Identifikationsnummer übereinstimmen.

12. Autorisierungssystem nach Anspruch 11, wobei mehrere Autorisierungseinheiten (6) vorgesehen sind, wobei die Transaktionsbereitstellungseinheit (2) an alle Autorisierungseinheiten oder an eine Untermenge der Autorisierungseinheiten (6) jeweils die Transaktionsinformation sendet, wobei die Untermenge abhängig von dem Inhalt der Anfrage-Nachricht und/oder einer Meta-Information der Anfrage-Nachricht und/oder einer Benutzervorgabe und/oder einer Benutzerhistorie bestimmt ist.
